# EUROPEAN PATENT SPECIFICATION

(11) **EP 2 710 472 B1**
(45) Date of publication and mention of the grant of the patent: **10.10.2018**
(21) Application number: 12726665.8
(22) Date of filing: 21.05.2012
(51) Int. Cl.: G06F 11/10

(54) **MEMORY WITH METADATA STORED IN A PORTION OF THE MEMORY PAGES**
SPEICHER MIT IN EINEM TEIL DER SPEICHERSEITEN GESPEICHERTEN METADATEN
MÉMOIRE AVEC MÉTADONNÉES ENREGISTRÉES DANS UNE PARTIE DES PAGES DE MÉMOIRE

(30) Priority: 20.05.2011 US 201113112132
(43) Date of publication of application: 26.03.2014
(73) Proprietor: Qualcomm Incorporated, San Diego, CA 92121 (US)
(72) Inventor: PLONDKE, Erich, James, San Diego, California 92121 (US); CODRESCU, Lucian, San Diego, California 92121 (US); ANDERSON, William, C., San Diego, California 92121 (US)
(74) Representative: Loveless, Ian Mark
(86) International application number: PCT/US2012/038794
(87) International publication number: WO 2012/162225

(56) References cited:
- EP-A2- 0 977 121
- WO-A2-02/058074
- US-A1- 2009 158 085

## Description

### Field of Disclosure

Disclosed embodiments are directed to configuring memory structures for high speed, low power applications. More particularly, exemplary embodiments are directed to configuring large Dynamic Random Access Memory (DRAM) structures for use as cache memory.

### Background

Computer processing systems generally comprise several levels of memory. Closet to the processing core or Central Processing Unit (CPU) are caches, such as first-level cache, and furthest away from the CPU is the main memory. Caches have requirements of high speed, and small sizes, especially if the caches are close to the CPU and are placed on-chip. Accordingly, caches closest to the CPU are usually formed from Static Random Access Memory (SRAM), which features high speeds. However, SRAM also comes at a high cost. On the other hand, Dynamic Random Access Memory (DRAM) is slower than SRAM, but also less expensive. Accordingly, DRAM has historically found a place further away from the CPU and closer to main memory.

Recent advances in technology have made it feasible to manufacture DRAM systems with large storage capacity and low power features. For example, wide input/output (IO) interfaces, and energy efficient stacking have enabled manufacture of DRAM systems with large storage capacity (as high as 2GB), high bandwidth data transfers and also lower latencies than were previously known for DRAM.

Accordingly, the relatively large storage may make it possible for Low Power Stacked DRAM systems to act as on-chip main memory systems in some low power embedded systems and handheld device applications. However, such Low Power Stacked DRAM systems may not be a suitable replacement for main memory in high performance processing systems, as their storage capacity may not be large enough to meet the needs of main memory.

On the other hand, Low Power Stacked DRAM systems, featuring low energy and high speeds, may now be more attractive for caches close to the CPU. For example, the Low Power Stacked DRAM systems may be configured as caches for conventional DRAM systems which may be too slow to be placed close to the CPU. Accordingly, the Low Power Stacked DRAM systems may provide higher storage capacity in cache memories close to the CPU than were previously known.

However, currently available off-the-shelf Low Power Stacked DRAM models may suffer from several limitations which may restrict their ready applicability to such cache memory applications close to the CPU. For example, off-the-shelf Low Power Stacked DRAM systems may not be equipped with features like error-correcting codes (ECC). DRAM cells may be leaky and highly prone to errors. Therefore, a lack of error detection and error correction capability, such as ECC mechanisms, may render the Low Power Stacked DRAM systems unsuitable for their use in caches close to the CPU, or as any other kind of storage in an error-resistant system.

Another obstacle in configuring off-the-shelf Low Power Stacked DRAM systems for use as cache memory is their lack of support for features which enable high speed data access, such as tagging mechanisms. As is well known, cache memories include tagging mechanisms which specify the memory address corresponding to each copied line in the cache. Efficient tag structures enable high speed lookups for requested data in the cache memories. However, off-the-shelf Low Power Stacked DRAM systems do not feature tagging mechanisms, thereby rendering them unsuitable for use as caches, in the absence of alternate techniques for tag storage. Designing suitable tagging mechanisms for use in conjunction with DRAMs presents several challenges. For example, in the case of large DRAMs (2GB, for example) tag fields themselves would require several MB of storage space. This large tag space overhead gives rise to several challenges in the placement and organization of tags on-chip.

Additionally, the design of tagging mechanisms for Low Power Stacked DRAMs is complicated by the implicit balance involved in sacrificing tag space for larger set-associativity, thus inviting problems of high miss rates. Similarly, challenges are also presented in designing Low Power Stacked DRAM systems to include intelligence associated with directory information or other memory coherency information for multi-processor environments.

Accordingly, in order to advantageously exploit Low Power Stacked DRAM systems for use in cache memory applications close to the CPU, there is a need to overcome challenges created by sensitivity to errors, lack of efficient tagging mechanisms and related intelligence features in conventional DRAM systems.

EP0977121 describes a nonvolatile memory recording apparatus and recording method involving relative placement of bits in pipelined order access.

US2009/158085 describes a power save translation table operating in flash memory that decouples systems addresses and physical addresses.

### SUMMARY

The invention relates to an apparatus, method and computer storage readable medium as defined by the claims.

### BRIEF DESCRIPTION OF THE DRAWINGS

The accompanying drawings are presented to aid in the description of embodiments of the invention and are provided solely for illustration of the embodiments and not limitation thereof.
FIG. 1 illustrates a conventional DRAM system comprising a page of data without related metadata.
FIG. 2 illustrates a DRAM system according to exemplary embodiments, wherein a page of the DRAM system is configured for use in a cache, by including metadata related in the page, corresponding to data stored in the page.
FIG. 3 illustrates an exemplary time line for pipelined access of an exemplary DRAM system configured for use as a cache.
FIG. 4 illustrates a flow chart detailing an exemplary method of configuring a page-based memory system without pre-existing metadata, for use as a cache.

### DETAILED DESCRIPTION

Aspects of the invention are disclosed in the following description and related drawings directed to specific embodiments of the invention. Additionally, well-known elements of the invention will not be described in detail or will be omitted so as not to obscure the relevant details of the invention.

The word "exemplary" is used herein to mean "serving as an example, instance, or illustration." Any embodiment described herein as "exemplary" is not necessarily to be construed as preferred or advantageous over other embodiments. Likewise, the term "embodiments of the invention" does not require that all embodiments of the invention include the discussed feature, advantage or mode of operation.

The terminology used herein is for the purpose of describing particular embodiments only and is not intended to be limiting of embodiments of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

As previously presented, currently available off-the-shelf DRAM systems such as Low Power Stacked DRAM systems may be highly error prone and therefore, may not meet critical standards of data fidelity required in cache memories. Accordingly, exemplary embodiments comprise configurations of such Low Power Stacked DRAM systems wherein error detection and error correction features, such as ECC mechanisms, are introduced. Embodiments also include efficient utilization of data storage space and page-based memory architecture of Low Power Stacked DRAM systems, in order to introduce ECC bits with minimal storage space overhead and high speed access.

Exemplary embodiments also recognize that available off-the-shelf Low Power Stacked DRAM architectures lack built-in tagging mechanisms for fast data searches. DRAM systems conventionally store data in pages. For example, a DRAM system may comprise data stored in 1KB page sizes. Embodiments realize a conversion of page-based DRAM memory into cache-like memory with tagging mechanisms, by treating each page as a set in a set-associative cache. Hereafter, without loss of generality, the description will focus on a single page of a Low Power Stacked DRAM system, configured as a cache with a single set, for ease of understanding. Each line in the page may then be treated as a way of the set-associative cache, and tags may be applied to each line. The tags comprise bits required to identify whether a particular memory location is present in the cache. Commonly, memory addresses are configured such that a few selected bits of the memory address may be used to identify bytes in a line, a few other selected other bits may be used to identify the set to which the memory address corresponds, and the remaining address bits may be utilized for forming the tag. However, the tag fields that are introduced by this process present challenges in their storage, organization, and placement.

Firstly, the tag fields require significant storage space. For example, an embodiment may involve configuration of a Low Power Stacked DRAM with page sizes of 1 Kilo Byte (KB) as a cache memory. Accordingly, the 1KB page may be configured as a 16-way cache with 64 Byte (B) lines. Assuming the physical memory is of size 1 Terabyte (TB), 40-bits may be required for addressing the physical memory space. Accordingly, 6-bits may be required to identify a byte in a 64B line and 21-bits to identify the set. Thus, 40 - (6+21), or 13-bits may be required to form a tag for each line in a 1KB 16-way DRAM cache with approximately 2 million sets. Therefore, for a 16-way cache with one cache line per each of the 16-ways, the number of tag bits may be 13x16 or 208-bits. As will be appreciated, 208-bits of tags for each 1KB page size of DRAM data presents a significant tag space overhead.

Secondly, it will be recognized that in order to reduce the tag space, cache line size may be increased and the number of cache line entries may be decreased, such that the overall storage capacity of the cache remains unaltered. However, increasing the cache line size at the expense of decreasing the number of cache entries, may increase the miss rate. Further, increasing the cache line size also has the effect of increasing the amount of data that is transferred when a cache line is filled or read out. Further, intelligent organization of the cache lines and pages has significant implications on the number of pages which may need to be accessed in the process of searching for requested data. Accordingly, exemplary embodiments will describe efficient solutions for challenges involved in the tag space overhead and organization. For example, certain embodiments include tag fields corresponding to data in a page, within the page itself, such that on a page read, if the tags indicate a hit, then the corresponding data may be accessed while the page is still open. Additionally, exemplary embodiments also take into account the need for efficient configuration of directory information and memory coherency information for multi-processor environments.

As used herein, the term "metadata" inclusively refers to the various bits of information and error correcting codes that correspond to data introduced in the DRAM systems in exemplary embodiments. For example, ECC-bits, tag information (including dirty/valid/locked mode information, as is known in the art), directory information, and other memory coherency information may be collectively referred to as metadata. Exemplary embodiments are directed to techniques for introducing metadata in DRAM systems which lack such metadata. The embodiments are further directed to efficient storage, organization, and access of the metadata, in order to configure the DRAM systems as reliable and high efficiency cache systems.

It will be appreciated, that while reference and focus is on configuring Low Power Stacked DRAM systems as above, embodiments described herein are not so limited, but may be easily extended to converting any memory system without metadata to a memory system which includes metadata.

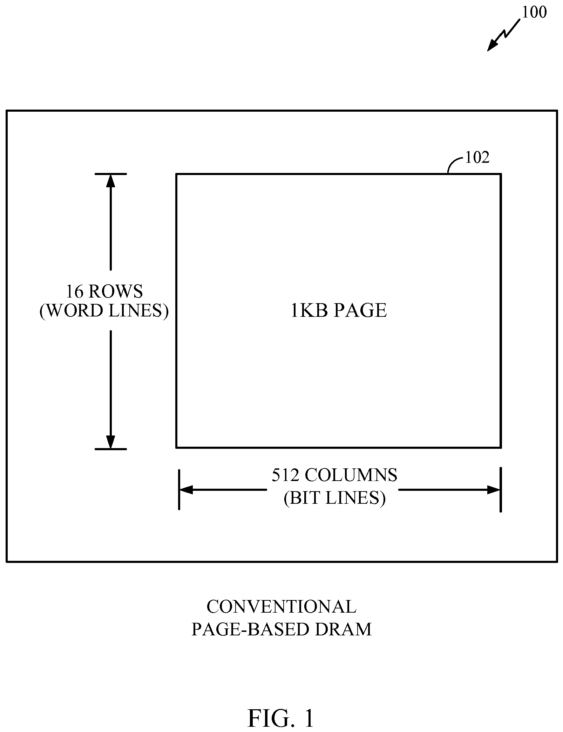

The following describes an exemplary process of configuring a DRAM system, such as a Low Power Stacked DRAM system, lacking error detection/correction features, into an exemplary DRAM system comprising efficient ECC implementations. With reference to FIG. 1, there is shown a conventional DRAM system 100 comprising page 102. Page 102 is of size 1KB, divided into 16 rows (word lines) and 8x64=512 columns (bit lines), as illustrated. Page 102 stores data in 1KB DRAM bit cells, wherein each bit cell is formed of a capacitor which stores information in the form of charge.

As previously discussed, DRAM system 100 is volatile because the bit cells' capacitors are leaky. Constant refreshing of the capacitors is required in order to retain the information stored therein. Moreover, the information is susceptible to errors introduced by various external factors, such as fluctuations in electro-magnetic fields. Therefore, error detection and correction is crucial for assuring fidelity of stored data.

A common technique for error detection and correction involves the use of ECC bits. ECC bits represent a level of redundancy associated with data bits. This redundancy is used to check the consistency of data. ECC bits are initially calculated based on original data values which are known to be correct. As a simple example, ECC bits may represent a parity value, such that the parity value may indicate if the number of logic "ones" present in the original data is odd or even. At a later point in time, a parity value may be generated again on data then present, and compared with the ECC bits. If there is a mismatch, it may be determined that at least one error has been introduced in the original data. More complex algorithms are well known in the art for sophisticated analysis of errors and subsequent correction of errors if detected, using the basic principles of ECC. Detailed explanations of such algorithms will not be provided herein, as skilled persons will recognize suitable error detection/correction algorithms for particular applications which are enabled by exemplary embodiments.

Returning now, to DRAM system 100 of FIG. 1, several options are available for introducing ECC bits in page 102, for example. Conventionally, 8 bits of ECC information are employed for each 64 bits of data, in order to enable single-error-correction/double-error-detection (SEC/DED), which comprises a 12.5% overhead introduced by the ECC bits. It is recognized that such a traditional implementation may be motivated by the stock availability in the market, of 8-bits of ECC for every 64-bits of data. However, a customized implementation of ECC bits built-in alongside the data, is capable of more efficient SEC/DED, such that fewer bits are required on average to correct errors in memory. Exemplary embodiments are capable of shrinking the overhead to 2.1%, by using 11 ECC-bits per 512-bits of data for SEC/DED and to 4.1%, by using 21 ECC-bits per 512-bits of data for double-error-correction (DEC). Accordingly, page 102, which comprises 1 KB or 1024 Bytes of data, may be segmented into 16 64-B (512-bits) lines. Thus, a SEC/DED implementation may require 16*11, or 176 bits of ECC per page.

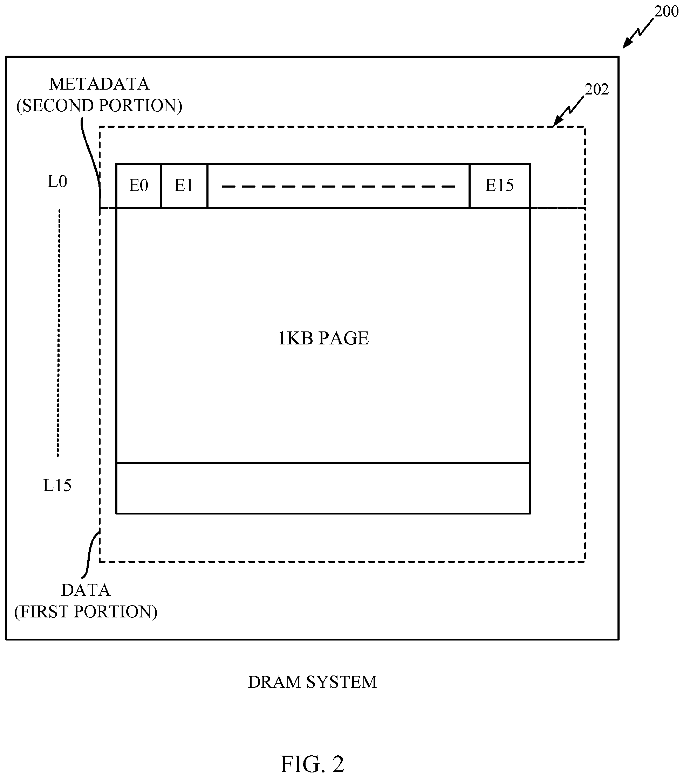

With reference now to FIG. 2, there is shown an efficient placement of ECC bits within a page. FIG. 2 illustrates DRAM system 200 configured according to exemplary embodiments. DRAM system 200 may be formed from a Low Power Stacked DRAM model in exemplary embodiments. DRAM system 200 comprises page 202 which is configured to store ECC bits alongside data bits. Page 202 comprises 16-ways or lines LO-L15, with each line comprising 64-Bytes (512 bits). Lines L1-L15 are utilized for storing data, while line L0 is earmarked for metadata. FIG. 2 illustrates 16 32-bit fields EO-E15 in line L0. Fields EO-E15 uniquely correspond to metadata for one of the lines LO-L15, respectively. Among other information, fields EO-E15 may comprise ECC bits relating to lines LO-L15.

According to exemplary embodiments, lines L1-L15 may first be filled with data to be stored in page 202. ECC bits may then be calculated for each of the lines of data L1-L15, and the ECC bits may be stored in fields E1-E15 respectively. As shown above, 11-bits of ECC may be sufficient for SEC/DED of each of the 512-bit lines L1-L15. In this example, 11 of the 32-bits in each of fields E1-E15 may be occupied by ECC bits, thus making available 21-bits for use by other metadata information pertaining to lines L1-L15, as described further below. Regarding field E0, ECC information pertaining to fields E1-E15 may be made available in field E0, such that the metadata fields may also be afforded protection from possible errors. In certain implementations, field E0 may be set to a zero-value for performing ECC calculations. Skilled persons will recognize efficient implementation details of ECC for particular applications, based on the above detailed technique.

Description will now be provided for efficient implementations of tagging mechanisms for fast searching of data in page 202 of FIG. 2. As previously introduced, the entire physical memory space may be assumed to be of size 1 TB. The 1TB physical memory space may be addressed with 40-bits. Assuming that the entire 1TB physical memory is addressed on a 64-Byte (i.e. 2^6 Byte) granularity, the 1TB (i.e. 2^40 Byte) physical memory would comprise 2^34 such 64-Byte lines. A total of 27-bits of addressing will not be required for forming the tags. Thus, the remaining 13-bits of the 40-bit address space will be sufficient to form efficient tags to correspond to each of the 64-Byte lines. Accordingly, in this example, 13-bits of tag information may be stored in each of fields E1-E15, corresponding to lines L1-L15.

With continuing reference to FIG. 2, tags thus stored in fields E1-E15 will ensure that all of the tags corresponding to lines L1-L15 in page 202 are contained within page 202. As will now be seen, such an organization of tags within the same page as corresponding data, advantageously improves access and search speeds for requested data when page 202 is configured as a cache.

In exemplary embodiments, when a data request is directed to page 202 of DRAM system 200, page 202 is first opened for inspection. Next, line L0 is accessed, and metadata including tags in fields E1-E15 are analyzed. If there is a hit in one of the tags in fields E1-E15, the line L1-L15 corresponding to the tag which caused a hit, will be determined to be the line comprising requested data. The data line comprising requested data may then be read out, for example, in a read operation. On the other hand, if there is no hit in any of the tags stored in fields E1-E15, it may be quickly determined that page 202 does not comprise the requested data, and page 202 may be promptly closed. Alternatively, if the requested data is not present in the cache and will cause a miss, leading to the data being subsequently placed in the cache, the appropriate page is opened for the new line, and also for any evicted line that may also need to be written back as a result of the miss. As each page is treated as a set in exemplary embodiments, once it is determined that page 202 does not comprise the requested data and page 202 is closed, it may be determined that the requested data is not present in DRAM system 200. Thereafter, embodiments may then initiate access to main memory to service the data request. Thus, it will be appreciated that configuring data and corresponding tags in the same page, obviates the need for separate degenerate accesses to a tag database followed by access to stored data, thus improving access speeds and energy efficiency.

Now will be described, several optimizations to the organization of metadata in exemplary embodiments, in order to further improve speed and efficiency. Memory accesses may be pipelined in processing systems, such that a memory access operation may be broken down into several steps, with each step executed in a single cycle of the system clock. Such steps may be expressed as "beats", wherein a first beat of a memory operation may be performed in a first clock cycle, a second beat performed in the next clock cycle, and so on. The metadata may be organized such that more critical information is made available during the first few beats. Such an organization may enable a prompt determination of the usefulness of a particular page which has been opened for inspection.

For example, in an embodiment, the least significant 8-bits of the 13-bit tags may be placed in fields E1-E15 in such a manner as to be made available in the first beat after page 202 is opened. These least significant 8-bits of the tags provide a very good estimation of the likelihood of a hit or miss for requested data within page 202. In a case wherein only one of the tags in fields E1-E15 present a hit in the least significant 8-bits, it may be determined that the hit is less likely to be spurious (if on the other hand, multiple hits are presented, then it is likely that the least significant 8-bits may be insufficient to accurately determine the presence of requested data in page 202). Accordingly, if a single hit is determined in the first beat, an early fetch request may be issued for the corresponding data.

Thereafter, the remaining bits of the tag may be accessed in a second beat, and studied in conjunction with the least significant 8-bits of the tag accessed in the first beat. The complete tag may then be analyzed for a hit or miss, and action may be taken accordingly. For example, if it is determined in the second beat that the hit indication in the first beat is spurious, then any issued early fetch requests may be aborted. Alternately, if a hit is determined or confirmed in the second beat, a fetch request may be initiated or sustained, respectively. A miss indication in the first and second beats may trigger the search process to proceed to a different page within DRAM system 200. Skilled persons will recognize various alternative implementations on similar lines as described above, without departing from the scope of exemplary embodiments.

Further optimizations may include placing ECC bits in fields E1-E15, such that they may be accessed in later beats after critical tag information. This is because ECC bits may not be relevant for quick determination of the presence of requested data in page 202. In certain embodiments, ECC bits may be also be determined for the metadata itself (and stored, for example, in field E0). If such ECC bits reveal that an error may have occurred in the tags, then the previous determination of hits/misses in earlier beats may need to be suitably revised. Speculative fetching of data based on hit/miss determination in earlier beats may be suitably metered in embodiments based on acceptable trade-offs between speed and power requirements, as speculative fetches may improve speed at the cost of burning power in the case of misprediction.

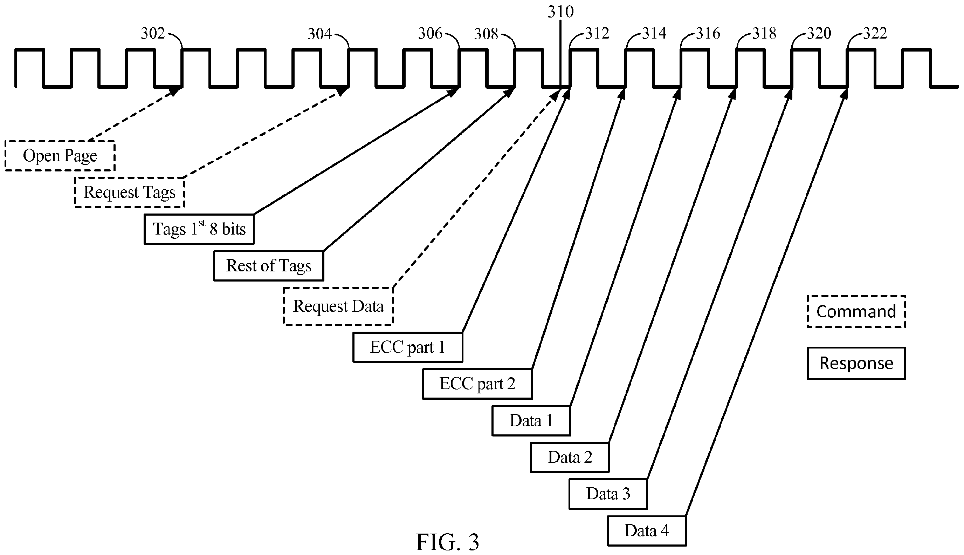

With reference now to FIG. 3, there is shown an exemplary time line for processing a data request on page 202, based on an optimized organization of metadata. As shown, at time 302, a command is issued to open page 202 for inspection. At time 304, tags from fields E1-E15 are requested for inspection from line L0 of page 202. At time 306, the least significant 8-bits of the tags are made available (first beat). At time 308, the remaining bits of the tag and any further metadata are made available from page 202 (second beat). Hit/miss determinations may be performed in the first and/or second beats based on the retrieved tag bits. Assuming a non-spurious hit has been realized in one of the retrieved tags, a request from the corresponding line is generated by the search process, which reaches page 202 at time 310. At times 312 and 314, the 11 ECC bits may be retrieved from fields EO-E15 in parts 1 and 2 (during third and fourth beats, for example). Assuming that the ECC bits indicate that no errors are present in the requested data from the line which had caused a hit during the first and second beats, the data (64-Bytes) is retrieved in four beats at times 316-322. Thus a pipelined execution of processing a search request on page 202 may be performed, which advantageously utilizes the optimized organization of metadata in exemplary embodiments.

Further beneficial features may be included in certain embodiments. For example, embodiments may derive further advantages from retaining metadata in the same page as corresponding data, as will now be described. Conventional indexing schemes rely on least significant bits for forming tags, such that consecutively addressed lines are organized in consecutive sets in a set-associative cache structure. Extending such conventional indexing principles to exemplary embodiments would imply that a new page may need to be opened on consecutive misses on consecutively addressed lines, because each page has been configured as a set. In order to minimize the negative impacts associated with such consecutive misses, embodiments may utilize middle bits of the tag for indexing, as opposed to the least significant bits. Thus, it will be ensured that misses on consecutively addressed lines may fall within the same DRAM page, and multiple DRAM pages need not be successively opened.

As an illustrative example, the least significant 6-bits of the 13-bits of tags in exemplary embodiments may be used to address individual bytes in a 64-Byte line. Therefore, instead of using the least significant bits as in conventional techniques, higher order bits in positions 8-29 may be used for indexing in exemplary embodiments, which would facilitate consecutively addressed lines to belong to the set, thereby causing misses on consecutively addressed lines to fall within the same DRAM page. While such an organization of lines within the DRAM page-cache may increase conflict pressure among the various lines in a page, such organizations would advantageously improve latency. As will be recognized, the 16 lines in page 202 have been configured to form a 15-way cache (lines L1-L15; line L0 is used for metadata).

Further advantageous aspects may be included in exemplary embodiments, based on unused metadata space which may be available in fields EO-E15. As has been described with respect to page 202, each of the fields EO-E15 comprises 32-bits. The ECC bits occupy 11-bits, and tag information including state bits (representing valid/dirty/locked states) occupy 13+3 = 16-bits. This leaves 5-bits of unused space in the metadata fields. As previously described, directory information and other cache-coherency related information may be stored in the remaining 5-bits of metadata. Further, "valid," "dirty," and "locked" bits may also be introduced in the metadata fields. Valid and dirty bits may assist in tracking and replacing outdated/modified cache lines. Sometimes, defective parts may be recovered by designating a related DRAM cache line as invalid and locked. Other information, such as information to facilitate more efficient replacement policies or prefetch techniques, may also be introduced in the metadata fields. Various other forms of intelligence may be included in the metadata fields, and skilled persons will be able to recognize suitable configurations of metadata, based on exemplary descriptions provided herein.

Additionally, exemplary embodiments may also be configured to cache metadata separately, such that information related to frequently accessed cache lines corresponding to the cached metadata may be retrieved speedily. Implementations may involve separate caching structures for caching such metadata, or alternately, such caching may be performed in one or more pages of a DRAM system such as DRAM system 200. As a further optimization, only the metadata related to pages which are currently known to be open may be cached when it is known that corresponding cache lines in the open pages have a high likelihood of future access, based on the nature of applications being executed on the memory system.

From the above disclosure of exemplary embodiments, it will be seen that a page based memory device, (such as DRAM system 200 in FIG. 2), may be configured, such that each page of the memory device, (such as page 202), may be divided into a first portion (for example, lines L1-L15) and a second portion (such as, line L0), such that the first portion comprises data, and the second portion comprises metadata corresponding to the data in the first portion.

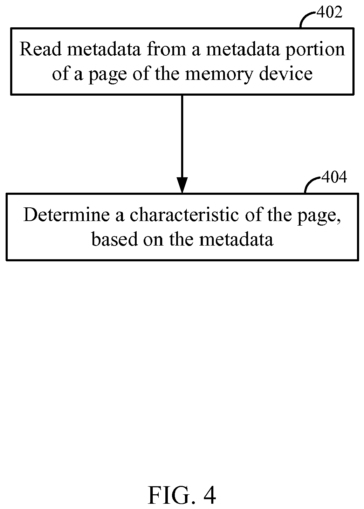

It will also be appreciated that embodiments include various methods for performing the processes, functions and/or algorithms disclosed herein. For example, as illustrated in FIG. 4, an embodiment can include a method of using a page-based memory device without dedicated metadata, as a cache, comprising: reading metadata (e.g. fields E0-E15 - which may include address tags or ECC bits - as illustrated in FIG. 2) from a metadata portion (e.g. second portion 202 of FIG. 2) of a page (e.g. page 200 of FIG. 2) of the memory device (Block 402); and determining a characteristic of the page, based on the metadata (for example, determining whether desired information is present based on metadata comprising address tags, or determining if an error is detected in data present in the page, based on metadata comprising ECC bits - Block 404). Based on the outcome of determining the characteristic, the method may optionally include taking further action, such as, reading the desired information if the desired information is present in the page, or correcting an error which may have been detected (not shown).

Further, it will be appreciated that Low Power Stacked DRAM such as DRAM system 200 may be accessed by a master device such as a processing core through a wide input/output interface, true silicon via (TSV) interface, or a stacked interface.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

Accordingly, an embodiment of the invention can include a computer readable media embodying a method for configuring a memory device for use as a cache. Accordingly, the invention is not limited to illustrated examples and any means for performing the functionality described herein are included in embodiments of the invention.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A memory system comprising:
a page-based memory device without pre-existing metadata, wherein a page of the memory device comprises a first storage means and a second storage means;
wherein the first storage means are suitable for storing metadata; and the second storage means are suitable for storing data, wherein the metadata in the first storage means is associated with the data in the second storage means,
**characterised in that**
the relative placement of bits within the metadata is based on pipelined order of access, such that more critical bits are accessible before less critical bits during pipelined access of bits of the metadata over two or more clock cycles.

2. The memory system of claim 1, wherein the second storage means is a first portion of the page of the memory device and the first storage means is a second portion of the page.

3. The memory system of claim 2, wherein the metadata corresponds only to data in the same page.

4. The memory system of claim 1, wherein the metadata comprises address tag information, and wherein relative placement of one or more bits of the address tag information is based on likelihood of indication of presence of corresponding data in the first portion by the one or more bits of the address tag information.

5. The memory system of claim 1, wherein the metadata comprises at least one of directory information, memory coherency information, or dirty/valid/lock information.

6. The memory system of claim 2, wherein the memory device is coupled to a master device through at least one of a wide input/output interface, true silicon via (TSV) interface, or a stacked interface.

7. The memory system of claim 2, integrated in at least one semiconductor die.

8. A method of configuring a page-based memory device without pre-existing dedicated metadata, the method comprising:
storing metadata in a metadata portion of a page of the memory device; **characterised by**
ordering bits of the metadata such that relative placement of bits within the metadata is based on pipelined order of access, such that more critical bits are accessible before less critical bits during pipelined access of bits of the metadata over two or more clock cycles;
reading metadata from the metadata portion of the page of the memory device; and
determining a characteristic of the page, based on the metadata.

9. The method of claim 8, wherein determining the characteristic comprises determining whether desired information is present in the page;
taking a predetermined action if the desired information is not present in the page.

10. The method of claim 9, wherein the metadata comprises an address tag, and wherein relative placement of one or more bits of the address tag is based on likelihood of indication of presence of corresponding data, stored in a data portion of the page, by the one or more bits of the address tag.

11. The method of claim 10, wherein middle bits of the address tag are used to determine a page to open.

12. The method of claim 11, wherein least significant bits of the address tag is used as part of a tag.

13. The method of claim 12, comprising reading part of the tag and taking a predetermined action based on the part of the tag.

14. The method of claim 8, wherein the page-based memory device is a cache memory device;
the method further comprises storing the metadata in a separate cache.

15. A computer-readable storage medium comprising code, which, when executed by a processor, causes the processor to perform operations for configuring a page-based memory device without pre-existing dedicated metadata, the non-transitory computer-readable storage medium comprising:
code for performing a method of any of claims 8 to 14

## Patentansprüche

1. Speichersystem, das Folgendes umfasst:
ein seitenbasiertes Speichergerät ohne vorexistierende Metadaten, wobei eine Seite des Speichergeräts ein erstes Speichermittel und ein zweites Speichermittel umfasst;
wobei das erste Speichermittel zum Speichern von Metadaten geeignet ist und das zweite Speichermittel zum Speichern von Daten geeignet ist,
wobei die Metadaten im ersten Speichermittel mit den Daten im zweiten Speichermittel assoziiert sind,
**dadurch gekennzeichnet, dass** die relative Platzierung von Bits in den Metadaten auf einer zeitverschachtelten Zugriffsfolge basiert, so dass kritischere Bits vor weniger kritischen Bits während des zeitverschachtelten Zugriffs auf Bits der Metadaten über zwei oder mehr Taktzyklen zugänglich sind.

2. Speichersystem nach Anspruch 1, wobei das zweite Speichermittel ein erster Teil der Seite des Speichergeräts und das erste Speichermittel ein zweiter Teil der Seite ist.

3. Speichersystem nach Anspruch 2, wobei die Metadaten nur Daten in derselben Seite entsprechen.

4. Speichersystem nach Anspruch 1, wobei die Metadaten Adress-Tag-Informationen umfassen und wobei eine relative Platzierung von einem oder mehreren Bits der Adress-Tag-Informationen auf einer Wahrscheinlichkeit der Anzeige der Präsenz entsprechender Daten im ersten Teil durch die ein oder mehreren Bits der Adress-Tag-Informationen basiert.

5. Speichersystem nach Anspruch 1, wobei die Metadaten wenigstens eines aus Verzeichnisinformationen, Speicherkohärenzinformationen oder Schmutzig/Gültig/Sperr-Informationen umfassen.

6. Speichersystem nach Anspruch 2, wobei das Speichergerät mit einem Master-Gerät durch wenigstens eines aus einer breiten Ein-/Ausgabeschnittstelle, einer TSV-(True Silicon Via)-Schnittstelle oder einer gestapelten Schnittstelle gekoppelt ist.

7. Speichersystem nach Anspruch 2, integriert in wenigstens einem Halbleiterchip.

8. Verfahren zum Konfigurieren eines seitenbasierten Speichergeräts ohne vorexistierende dedizierte Metadaten, wobei das Verfahren Folgendes beinhaltet:
Speichern von Metadaten in einem Metadatenteil einer Seite des Speichergeräts;
**gekennzeichnet durch**
Ordnen von Bits der Metadaten, so dass eine relative Platzierung von Bits in den Metadaten auf einer zeitverschachtelten Zugriffsreihenfolge basiert, so dass kritischere Bits vor weniger kritischen Bits bei einem zeitverschachtelten Zugriff auf Bits der Metadaten über zwei oder mehr Taktzyklen zugänglich sind;
Lesen von Metadaten vom Metadatenteil der Seite des Speichergeräts; und
Bestimmen einer Charakteristik der Seite auf der Basis der Metadaten.

9. Verfahren nach Anspruch 8, wobei das Bestimmen der Charakteristik
das Bestimmen beinhaltet, ob gewünschte Informationen in der Seite vorhanden sind;
das Durchführen einer vorbestimmten Aktion beinhaltet, wenn die gewünschten Informationen in der Seite nicht vorhanden sind.

10. Verfahren nach Anspruch 9, wobei die Metadaten einen Adress-Tag umfassen und wobei eine relative Platzierung von einem oder mehreren Bits des Adress-Tag auf einer Wahrscheinlichkeit der Anzeige der Präsenz von entsprechenden Daten basiert, gespeichert in einem Datenteil der Seite, durch die ein oder mehreren Bits des Adress-Tag.

11. Verfahren nach Anspruch 10, wobei mittlere Bits des Adress-Tag zum Bestimmen einer Seite zum Öffnen benutzt werden.

12. Verfahren nach Anspruch 11, wobei niedrigstwertige Bits des Adress-Tag als Teil eines Tag benutzt werden.

13. Verfahren nach Anspruch 12, das das Lesen eines Teils des Tag und das Durchführen einer vorbestimmten Aktion auf der Basis des Teils des Tag beinhaltet.

14. Verfahren nach Anspruch 8, wobei das seitenbasierte Speichergerät ein Cache-Speichergerät ist;
wobei das Verfahren ferner das Speichern der Metadaten in einem separaten Cache beinhaltet.

15. Computerlesbares Medium, das Code umfasst, der bei Ausführung durch einen Prozessor bewirkt, dass der Prozessor Operationen zum Konfigurieren eines seitenbasierten Speichergeräts ohne vorexistierende dedizierte Metadaten durchführt, wobei das nichtflüchtige computerlesbare Speichermedium Folgendes umfasst:
Code zum Durchführen eines Verfahrens nach einem der Ansprüche 8 bis 14.

## Revendications

1. Système de mémoire comprenant :
un dispositif de mémoire à base de pages sans métadonnées préexistantes, dans lequel une page du dispositif de mémoire comprend un premier moyen de mémorisation et un second moyen de mémorisation ;
dans lequel le premier moyen de mémorisation sert à mémoriser des métadonnées ; et
le second moyen de mémorisation sert à mémoriser des données,
dans lequel les métadonnées dans le premier moyen de mémorisation sont associées aux données dans le second moyens de mémorisation,
**caractérisé en ce que**
le placement relatif de bits dans les métadonnées est basé sur un ordre d'accès en pipeline, de telle sorte que les bits plus critiques soient accessibles avant les bits moins critiques des métadonnées durant deux ou plusieurs cycles d'horloge.

2. Système de mémoire selon la revendication 1, dans lequel le second moyen de mémorisation est une première partie de la page du dispositif de mémoire et le premier moyen de mémorisation est une seconde partie de la page.

3. Système de mémoire selon la revendication 2, dans lequel les métadonnées correspondent uniquement aux données dans la même page.

4. Système de mémoire selon la revendication 1, dans lequel les métadonnées comprennent des informations d'étiquette d'adresse, et dans lequel le placement relatif d'un ou de plusieurs bits des informations d'étiquette d'adresse est basé sur une probabilité d'indication de présence de données correspondantes dans la première partie par les un ou plusieurs bits des informations d'étiquette d'adresse.

5. Système de mémoire selon la revendication 1, dans lequel les métadonnées comprennent au moins l'une d'informations de répertoire, d'informations de cohérence de mémoire, ou d'informations invalides/valides/de verrouillage.

6. Système de mémoire selon la revendication 2, dans lequel le dispositif de mémoire est couplé à un dispositif maître par le biais d'au moins l'une d'une interface d'entrée/sortie large, d'une interface TSV (true silicon via) ou d'une interface empilée.

7. Système de mémoire selon la revendication 2, intégré dans au moins une puce à semiconducteur.

8. Procédé de configuration d'un dispositif de mémoire à base de pages sans métadonnées préexistantes dédiées, le procédé comprenant :
la mémorisation de métadonnées dans une partie de métadonnées d'une page du dispositif de mémoire ;
**caractérisé par**
la mise en ordre de bits des métadonnées de telle sorte que le placement relatif de bits dans les métadonnées soit basé sur un ordre d'accès en pipeline, de telle sorte que les bits plus critiques soient accessible avant les bits moins critiques durant un accès en pipeline de bits des métadonnées durant deux ou plusieurs cycles d'horloge ;
la lecture de métadonnées depuis la partie de métadonnées de la page du dispositif de mémoire ; et
la détermination d'une caractéristique de la page, en fonction des métadonnées.

9. Procédé selon la revendication 8, dans lequel la détermination de la caractéristique comprend la détermination que des informations souhaitées sont présentes ou non dans la page ;
la prise d'une mesure prédéterminée si les informations souhaitées ne sont pas présentes dans la page.

10. Procédé selon la revendication 9, dans lequel les métadonnées comprennent une étiquette d'adresse, et dans lequel le placement relatif d'un ou de plusieurs bits de l'étiquette d'adresse est basé sur une probabilité d'indication de présence de données correspondantes, mémorisées dans une partie de données de la page, par les un ou plusieurs bits de l'étiquette d'adresse.

11. Procédé selon la revendication 10, dans lequel les bits centraux de l'étiquette d'adresse sont utilisés pour déterminer une page à ouvrir.

12. Procédé selon la revendication 11, dans lequel des bits de poids faibles de l'étiquette d'adresse sont utilisées comme partie d'une étiquette.

13. Procédé selon la revendication 12, comprenant la lecture d'une partie de l'étiquette et la prise d'une mesure prédéterminée en fonction de la partie de l'étiquette.

14. Procédé selon la revendication 8, dans lequel le dispositif de mémoire à base de pages est un dispositif de mémoire cache ;
le procédé comprenant en outre la mémorisation des métadonnées dans un cache séparé.

15. Support de mémorisation lisible par ordinateur comprenant un code qui, à son exécution par un processeur, amène le processeur à exécuter des opérations de configuration d'un dispositif de mémoire à base de pages sans métadonnées préexistantes dédiées, le support de mémorisation non transitoire lisible par ordinateur comprenant :
un code pour mettre en oeuvre un procédé selon l'une quelconque des revendications 8 à 14.
